# FASCICULE DE BREVET EUROPEEN

(11) **EP 1 491 975 B1**
(45) Date de publication et mention de la délivrance du brevet: **18.03.2009**
(21) Numéro de dépôt: 04291158.6
(22) Date de dépôt: 05.05.2004
(51) Int. Cl.: G05B 9/02, G05B 9/03

(54) **Dispositif de réglage d'au moins un paramètre, en particulier d'un système de pilotage automatique d'un aéronef**
Einstellvorrichtung für mindestens einen Parameter, insbesondere für ein Autopilotsystem eines Flugzeuges
Adjustment device for at least one parameter, in particular for an autopilot system of an aircraft

(30) Priorité: 19.05.2003 FR 0305948
(43) Date de publication de la demande: 29.12.2004
(73) Titulaire: AIRBUS France, 31060 Toulouse (FR)
(72) Inventeur: Granger, Stéphane, 31000 Toulouse (FR); Bourret, Thierry, 31200 Toulouse (FR)
(74) Mandataire: Hauer, Bernard

(56) Documents cités:
- EP-A- 0 416 258
- US-A- 4 549 260
- US-A- 5 621 666
- US-A- 5 920 170

## Description

La présente invention concerne un dispositif de réglage d'au moins un paramètre.

Bien que non exclusivement, la présente invention s'applique plus particulièrement au réglage de paramètres sur un système de pilotage automatique d'un aéronef, notamment d'un avion de transport civil.

On sait que les aéronefs qui sont pourvus d'un système de pilotage automatique usuel, comportent un boîtier de commande manuelle dudit système, ce boîtier étant généralement du type FCU ("Flight Control Unit"). Un tel boîtier comprend un dispositif de réglage qui permet le réglage d'un certain nombre de paramètres, notamment l'altitude de l'aéronef, sa vitesse (ou son nombre de Mach), son cap (ou sa route), sa vitesse verticale (ou son angle de descente), ...

On sait de plus qu'un tel dispositif de réglage comporte généralement, pour le réglage d'un paramètre :
- au moins un sélecteur qui est susceptible d'être actionné par un opérateur ;
- au moins un codeur qui est entraîné en rotation par ledit sélecteur, lorsque ce dernier est actionné, et qui émet alors un signal représentatif de cette rotation ; et
- au moins une unité de calcul qui reçoit le signal émis par le codeur, le met en forme, effectue un calcul pour en déduire la valeur sélectionnée et est susceptible de transmettre la valeur sélectionnée ainsi calculée. Cette valeur sélectionnée est mise à disposition des équipements qui l'utilisent (tels que le système de pilotage automatique notamment), par exemple au moyen d'une liaison de type "ARINC 429". Elle est également communiquée, par exemple au moyen d'une liaison série interne au boîtier FCU, à un module d'affichage situé sur la face avant de ce dernier.

Dans des cas exceptionnels, correspondant par exemple à un fonctionnement du boîtier FCU dans des conditions environnementales très perturbées d'un point de vue électromagnétique ou en cas de dysfonctionnement même très bref du codeur ou d'un composant de l'une des parties du dispositif de réglage dudit boîtier FCU, on ne peut pas totalement exclure le risque que la valeur d'un des paramètres, sélectionnée par un pilote, soit modifiée sans qu'il y ait eu une action dudit pilote sur le sélecteur en vue de la modifier. Un tel comportement pourrait s'avérer déroutant pour le pilote, puisque le vol de l'aéronef ne correspondrait alors plus aux paramètres sélectionnés par ledit pilote.

Par le document US-A-5 920 170, on connaît un dispositif de réglage d'au moins un paramètre. Ce dispositif de réglage comprend pour le réglage de ce paramètre :
- au moins un sélecteur qui est susceptible d'être actionné par un opérateur ;
- au moins un codeur qui est entraîné en rotation par ledit sélecteur, lorsque ce dernier est actionné, et qui émet alors un signal représentatif de cette rotation ;
- au moins une unité de calcul qui reçoit le signal émis par le codeur, le met en forme, effectue un calcul pour en déduire la valeur sélectionnée et est susceptible de transmettre la valeur sélectionnée ainsi calculée ; et
- un premier moyen de détection qui est susceptible de détecter un actionnement dudit sélecteur.

La présente invention a pour objet de remédier aux inconvénients précités. Elle concerne un dispositif de réglage, qui permet de détecter, de façon simple et peu coûteuse, tout dysfonctionnement du type précité.

A cet effet, selon l'invention, ledit dispositif du type comprenant pour le réglage d'un paramètre d'aéronef :
- au moins un sélecteur qui est susceptible d'être actionné par un opérateur ;
- au moins un codeur qui est entraîné en rotation par ledit sélecteur, lorsque ce dernier est actionné, et qui émet alors un signal représentatif de cette rotation ;
- au moins une unité de calcul qui reçoit le signal émis par le codeur, le met en forme, effectue un calcul pour en déduire la valeur sélectionnée et est susceptible de transmettre la valeur sélectionnée ainsi calculée ; et
- un premier moyen de détection qui est susceptible de détecter un actionnement dudit sélecteur,
est remarquable en ce qu'il comporte de plus :
- un second moyen de détection qui est susceptible de détecter l'émission d'un signal indiquant une modification de la valeur sélectionnée ; et
- un moyen de comparaison qui est relié auxdits premier et second moyens de détection et qui déduit des informations reçues desdits premier et second moyens de détection un dysfonctionnement lorsque seul l'un desdits premier et second moyens de détection a réalisé une détection.

Ainsi, grâce à l'invention, on détecte un dysfonctionnement (dans le réglage du paramètre, c'est-à-dire dans la sélection de la valeur) lorsque les informations issues desdits premier et second moyens de sélection sont contradictoires, c'est-à-dire lorsque l'un a détecté une modification de la valeur sélectionnée et pas l'autre.

De préférence, toutefois, ledit moyen de comparaison déduit un dysfonctionnement, uniquement lorsque ledit second moyen de détection a détecté une modification de la valeur sélectionnée alors que ledit premier moyen de détection n'a pas détecté d'actionnement dudit sélecteur.

On notera que ledit dispositif de réglage perfectionné conformément à la présente invention est simple et peu coûteux.

Dans un mode de réalisation particulier, ledit dispositif de réglage comporte de plus :
- un premier moyen qui empêche la transmission par l'unité de calcul d'une modification de la valeur sélectionnée, lors de la détection d'un dysfonctionnement par ledit moyen de comparaison. Ainsi, en cas de dysfonctionnement, un dispositif utilisateur, tel qu'un système de pilotage automatique, ou un moyen d'affichage destiné à afficher les valeurs sélectionnées, ne prend pas en compte la valeur modifiée de façon non désirée par ce dysfonctionnement (et donc non commandée par l'opérateur) ; et
- un second moyen qui émet un signal d'alarme, par exemple un signal visuel, un signal sonore ou un signal tactile, lors de la détection d'un dysfonctionnement par ledit moyen de comparaison.

Dans un mode de réalisation préféré, ledit premier moyen de détection comprend un codeur auxiliaire qui est monté en série entre ledit sélecteur et ledit codeur. Comme ledit codeur auxiliaire est indépendant dudit codeur, il présente l'avantage de s'affranchir d'une panne de ce dernier.

En outre, avantageusement, ledit second moyen de détection comprend une carte électronique qui reçoit les informations émises à la sortie de ladite unité de calcul.

Par ailleurs, dans un mode de réalisation particulier, le dispositif de réglage conforme à l'invention comporte de plus un troisième moyen, par exemple un calculateur de gestion de vol de type "FMGC" ("Flight Management and Guidance Computer"), qui est susceptible d'envoyer un ordre de modification de la valeur sélectionnée directement à ladite unité de calcul, et ledit premier moyen de détection est susceptible de détecter un tel ordre et d'indiquer une telle détection audit moyen de comparaison.

Par ailleurs, dans un autre mode de réalisation avantageux, ladite unité de calcul comporte un premier calculateur qui reçoit le signal émis par le codeur et qui le met en forme, et un second calculateur qui reçoit le signal mis en forme par ledit premier calculateur, qui effectue un calcul pour en déduire la valeur sélectionnée et qui est susceptible de transmettre la valeur sélectionnée ainsi calculée, et ledit second moyen de détection est susceptible de détecter le signal qui est mis en forme par ledit premier calculateur et qui est transmis par ce dernier audit second calculateur.

Dans ce cas, avantageusement, ledit second moyen de détection et ledit moyen de comparaison sont intégrés dans ledit second calculateur.

En outre, dans ce dernier mode de réalisation avantageux, le dispositif de réglage conforme à l'invention comporte, de plus, un quatrième moyen qui empêche la prise en compte par ledit second calculateur d'informations transmises par ledit premier calculateur, relatives à une modification de la valeur sélectionnée, lorsque ledit moyen de comparaison a détecté un dysfonctionnement. De préférence, ce quatrième moyen est également intégré dans ledit second calculateur.

En outre, avantageusement, la liaison entre ledit premier moyen de détection et ledit moyen de comparaison transite par ledit premier calculateur et est munie d'une unité de traitement de signal discret, c'est-à-dire une unité qui traite l'information transmise par la liaison comme un signal discret, et qui est indépendante des fonctions logicielles dudit premier calculateur.

Par ailleurs, dans un autre mode de réalisation, dans lequel ladite unité de calcul comporte des première et seconde voies de calcul redondantes, ledit dispositif de réglage conforme à l'invention comporte un premier ensemble formé d'un second moyen de sélection et d'un moyen de comparaison, qui est associé à ladite première voie de calcul, un second ensemble formé d'un second moyen de sélection et d'un moyen de comparaison, qui est associé à ladite seconde voie de calcul, et un moyen de priorité pour prendre en compte de manière prioritaire, lorsque seul l'un desdits moyens de comparaison a détecté un dysfonctionnement, les informations issues de la voie de calcul, dont le moyen de comparaison associé n'a pas détecté de dysfonctionnement.

La présente invention concerne également un système de pilotage automatique d'un aéronef, comprenant une unité fonctionnelle qui est agencée dans un boîtier de commande muni d'un système de réglage pour régler des paramètres qui sont utilisés par ladite unité fonctionnelle.

Selon l'invention, ce système de pilotage automatique est remarquable en ce que ledit système de réglage de paramètres comporte au moins un dispositif de réglage tel que celui spécifié ci-dessus.

Les figures du dessin annexé feront bien comprendre comment l'invention peut être réalisée. Sur ces figures, des références identiques désignent des éléments semblables.

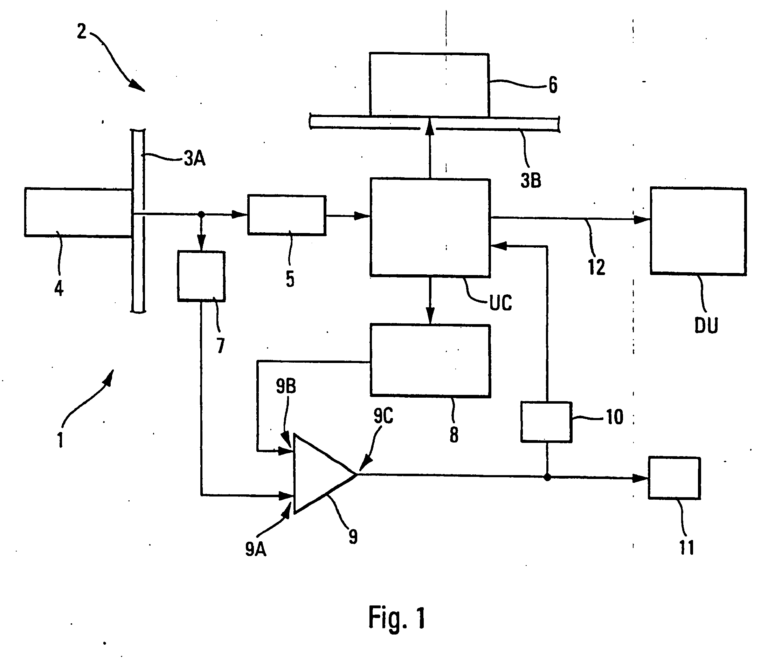

Les figures 1 à 5 sont les schémas synoptiques de différents modes de réalisation d'un dispositif de réglage conforme à l'invention.

Le dispositif de réglage 1 conforme à l'invention est destiné à régler au moins un paramètre, en particulier un paramètre d'un aéronef, tel que l'altitude, la vitesse ou le cap par exemple, comme on le verra plus en détail ci-dessous.

A cet effet, ledit dispositif de réglage 1 est muni d'un boîtier, dont on a uniquement représenté deux parties de paroi 3A et 3B sur la figure 1 pour des raisons de simplification du dessin, et comprend, pour le réglage d'un paramètre, un ensemble de réglage 2 comportant :
- un sélecteur 4, par exemple un bouton rotatif, qui est agencé sur une face externe du boîtier 3A, et qui est susceptible d'être actionné par un opérateur lorsqu'il souhaite modifier la valeur du paramètre considéré ;
- un codeur 5, en particulier une roue codeuse, qui est entraîné en rotation par ledit sélecteur 4, lorsque ce dernier est actionné par un opérateur et qui émet alors un signal représentatif de cette rotation (et donc de la sélection faite par ledit opérateur) ; et
- une unité de calcul UC qui reçoit le signal émis par le codeur 5, le met en forme, effectue un calcul pour en déduire la valeur sélectionnée et est susceptible de transmettre la valeur sélectionnée ainsi calculée.

Cette valeur sélectionnée est mise à la disposition d'un dispositif utilisateur DU, tel qu'un système de pilotage automatique, par exemple au moyen d'une liaison 12 de type "ARINC 429". Elle est également envoyée, par exemple au moyen d'une liaison série interne au boîtier, vers un moyen d'affichage usuel 6, qui est agencé sur une face externe 3B dudit boîtier et qui affiche la valeur sélectionnée.

Selon l'invention, ledit ensemble de réglage 2 du dispositif de réglage 1 comporte de plus :
- un moyen de détection 7 qui est susceptible de détecter un actionnement dudit sélecteur 4 ;
- un moyen de détection 8 qui est susceptible de détecter l'émission d'un signal indiquant une modification de la valeur sélectionnée ; et
- un moyen de comparaison 9 qui est relié auxdits moyens de détection 7 et 8 et qui déduit des informations reçues à ses entrées 9A et 9B desdits moyens de détection 7 et 8 un dysfonctionnement (disponible à sa sortie 9C), lorsque seul l'un desdits moyens de détection 7 et 8 a réalisé une détection.

Dans un mode de réalisation préféré, ledit moyen de comparaison 9 déduit un dysfonctionnement lorsque ledit moyen de détection 8 a détecté une modification de la valeur sélectionnée alors que ledit moyen de détection 7 n'a pas détecté d'actionnement dudit sélecteur 4, c'est-à-dire lorsque l'unité de calcul UC modifie la valeur sélectionnée sans qu'un opérateur ait commandé une telle modification par l'intermédiaire du sélecteur 4.

Dans un mode de réalisation particulier, ledit dispositif de réglage 1 comporte de plus :
- un moyen 10 qui empêche la transmission par l'unité de calcul UC d'une modification de la valeur sélectionnée, lors de la détection d'un dysfonctionnement par ledit moyen de comparaison 9. Ainsi, en cas de dysfonctionnement, un dispositif utilisateur DU, tel qu'un système de pilotage automatique d'aéronef, ou un moyen d'affichage 6 destiné à afficher les valeurs sélectionnées, ne prend pas en compte la valeur modifiée de façon non désirée par ce dysfonctionnement ; et
- un moyen 11 usuel, qui émet un signal d'alarme, par exemple un signal visuel, sonore ou tactile, lors de la détection d'un dysfonctionnement par ledit moyen de comparaison 9.

Dans un mode de réalisation préféré, ledit moyen de détection 7 comprend un codeur auxiliaire qui est monté en série entre ledit sélecteur 4 et ledit codeur 5. Comme ledit codeur auxiliaire 7 est alors indépendant dudit codeur 5, il présente l'avantage de s'affranchir d'une panne de ce dernier.

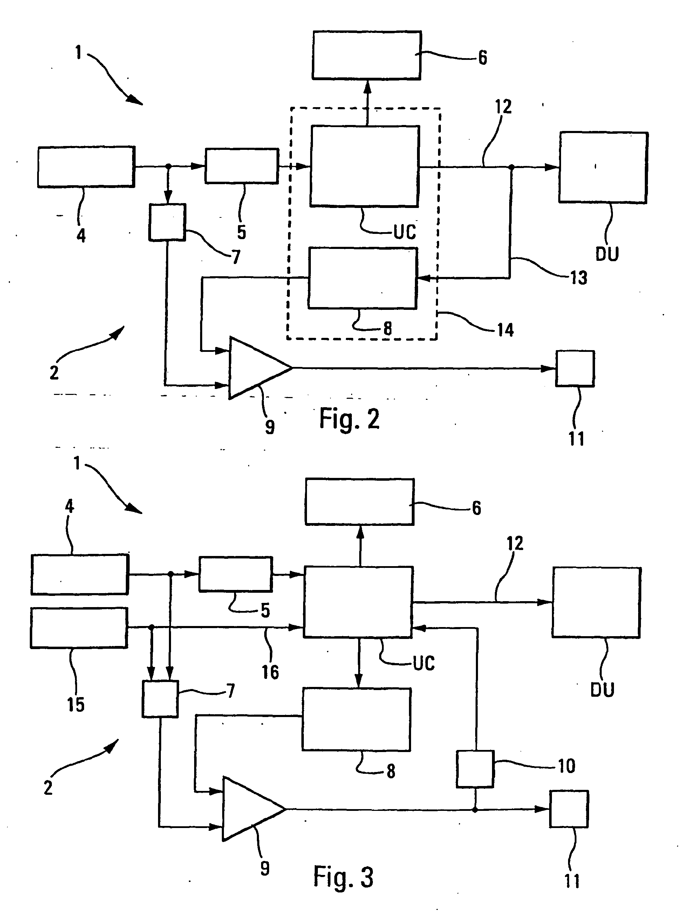

Dans un mode de réalisation particulier représenté sur la figure 2, le moyen de détection 8 réalise la détection d'une modification de la valeur sélectionnée à l'aide des informations qui sont transmises par le moyen de calcul UC à un dispositif utilisateur DU par l'intermédiaire de la liaison 12. A cet effet, ledit moyen de détection 8 est relié par une liaison 13, par exemple une liaison de type "ARINC 429", à ladite liaison 12. De préférence, ledit moyen de détection 8 est réalisé de façon logicielle sur une carte électronique. Sur le mode de réalisation de la figure 2, on a mis en évidence, par un rectangle en traits interrompus, l'ensemble 14 des éléments logiciels dudit dispositif de réglage 1 dans ce cas.

Une variante de réalisation de l'invention, qui est représentée sur la figure 3 et qui est particulièrement bien adaptée à la sélection de paramètres d'un aéronef, en particulier des paramètres de vitesse (ou de Mach), de cap (ou de route) ou de vitesse verticale (ou d'angle de descente), concerne le cas pour lequel la valeur sélectionnée du paramètre considéré peut être modifiée soit par un opérateur (pilote, etc ...) au moyen dudit sélecteur 4, soit sur ordre d'un calculateur 15 (tel que par exemple un calculateur de gestion de vol du type "FMGC" : "Flight Management and Guidance Computer") qui est relié à l'unité de calcul UC, par exemple au moyen d'une liaison 16 de type "ARINC 429".

Dans ce cas, ledit moyen de sélection 7 est formé de manière à pouvoir réaliser, outre la détection d'une action sur le sélecteur 4, la détection d'un ordre de modification de la valeur sélectionnée, émis par ce calculateur 15. Un tel mode de fonctionnement est avantageux, puisqu'il permet de ne pas déclencher d'alarme lorsqu'une modification de la valeur sélectionnée survient à la demande dudit calculateur 15, c'est-à-dire sans actionnement du sélecteur 4.

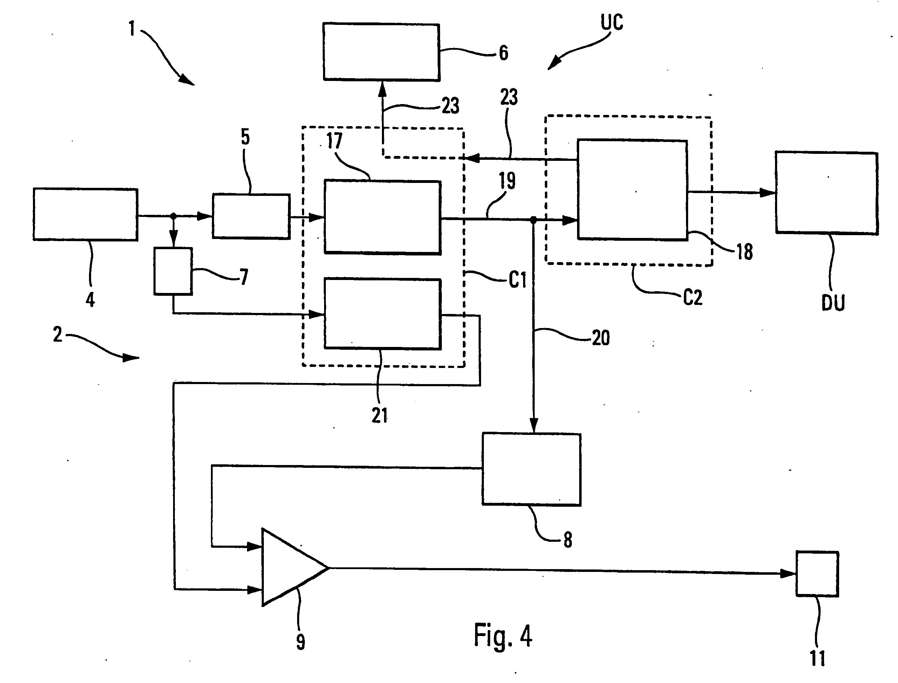

Dans un autre mode de réalisation représenté sur la figure 4, ladite unité de calcul UC comporte un calculateur C1 qui comprend une unité fonctionnelle 17 (logicielle) destinée à recevoir le signal émis par le codeur 5 et à le mettre en forme, et un calculateur C2 qui comprend une unité fonctionnelle 18 (logicielle) qui est reliée par une liaison 19 (par exemple une liaison de type "ARINC 429") au calculateur C1 et qui est destinée à recevoir le signal mis en forme par ledit calculateur C1, à effectuer un calcul pour en déduire la valeur sélectionnée et à transmettre la valeur sélectionnée ainsi calculée.

Dans ce cas, selon l'invention, ledit moyen de calcul 8 est susceptible de détecter par l'intermédiaire d'une liaison 20 le signal qui est mis en forme par ledit calculateur C1 et qui est transmis par ce dernier audit calculateur C2 par l'intermédiaire de la liaison 19.

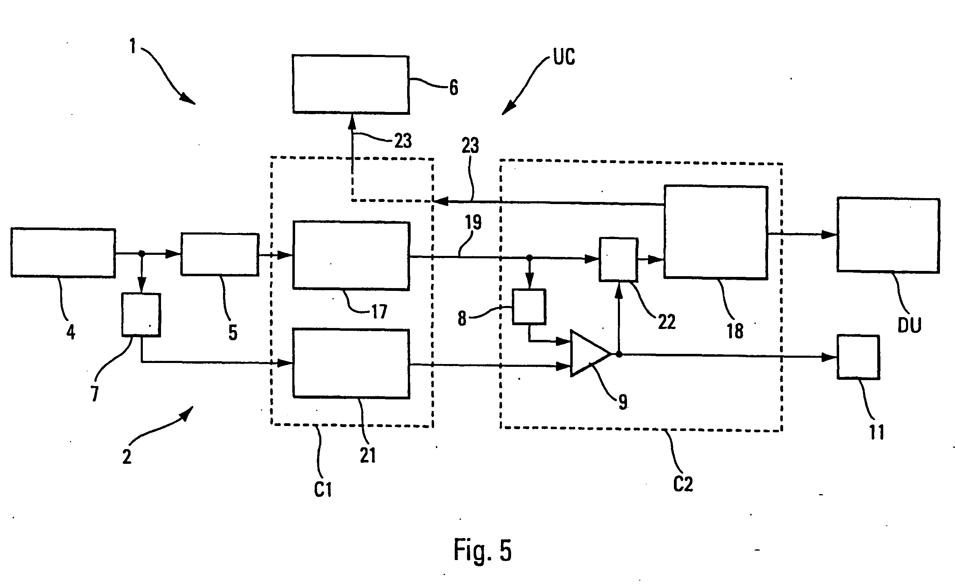

Par ailleurs, on notera que la liaison entre le moyen de détection 7 et le moyen de comparaison 9 peut être directe. Toutefois, dans un mode de réalisation préféré représenté sur les figures 4 et 5, la liaison entre ledit moyen de détection 7 et ledit moyen de comparaison 9 transite par ledit calculateur C1 et est munie d'une unité 21 qui traite le signal correspondant comme un signal discret, qui est intégrée dans ledit calculateur C1, mais qui est indépendante des fonctions logicielles usuelles (de mise en forme du signal reçu du codeur 5, notamment) de l'unité fonctionnelle 17 dudit calculateur C1.

Le fait que cette liaison soit réalisée de manière à prendre en compte un signal discret présente l'avantage de s'affranchir d'une éventuelle défaillance logicielle (défaillance de l'unité fonctionnelle 17) dudit calculateur C 1 .

Dans un mode de réalisation particulier représenté sur la figure 5, ledit moyen de détection 8 et ledit moyen de comparaison 9 sont intégrés dans ledit second calculateur C2. De par son architecture particulière, ce second calculateur C2 a la particularité de présenter un très haut degré d'intégrité et, de ce fait, un fonctionnement anormal de celui-ci est détecté et inhibé.

Le dispositif de réglage 1 conforme à ce mode de réalisation particulier comporte, de plus, un moyen 22 qui est intégré dans ledit calculateur C2 et qui empêche la prise en compte par ce calculateur C2 d'informations transmises par ledit calculateur C1, relatives au réglage du paramètre considéré, lorsque ledit moyen de comparaison 9 a détecté un dysfonctionnement.

Ledit dispositif de réglage 1 comporte, de plus, une liaison 23 issue du calculateur C2 et transitant par le calculateur C1 pour commander le moyen d'affichage 6.

Par ailleurs, dans un mode de réalisation particulier, non représenté, ladite unité de calcul UC comporte des première et seconde voies de calcul redondantes, et ledit dispositif de réglage 1 comporte :
- un premier ensemble qui est formé d'un moyen de sélection 8 et d'un moyen de comparaison 9 et qui est associé à ladite première voie de calcul ;
- un second ensemble qui est formé d'un moyen de sélection 8 et d'un moyen de comparaison 9 et qui est associé à ladite seconde voie de calcul ; et
- un moyen de priorité pour prendre en compte de manière prioritaire, lorsque seul l'un desdits deux moyens de comparaison 9 a détecté un dysfonctionnement, les informations issues de la voie de calcul, dont le moyen de comparaison 9 associé n'a pas détecté de dysfonctionnement.

Dans le cas où l'une de ces voies de calcul est déjà en panne avant la détection d'un dysfonctionnement, le signal de dysfonctionnement émis par le moyen de comparaison 9 peut être utilisé pour avertir le pilote du problème survenu, afin qu'il puisse prendre les dispositions appropriées. Dans ce cas, la voie de calcul qui n'était jusque là pas encore en panne, peut néanmoins rester disponible afin que le pilote puisse sélectionner différents autres paramètres.

Bien entendu, le dispositif de réglage 1 conforme à l'invention peut permettre le réglage d'une pluralité de paramètres différents. Il comporte alors une pluralité d'ensembles de réglage 2, dont chacun est destiné au réglage d'un paramètre particulier. Dans ce cas, le dispositif de réglage 1 comporte, de préférence, une seule unité de calcul UC qui est commune auxdits différents ensembles de réglage 2.

Dans une application préférée du dispositif de réglage 1 conforme à l'invention, le dispositif utilisateur DU est une unité fonctionnelle (logicielle) d'un système de pilotage automatique d'un aéronef et le dispositif de réglage 1 fait partie d'une unité FCU ("Flight Control Unit") qui est destinée au réglage d'un certain nombre de paramètres de l'aéronef, tels que l'altitude, la vitesse, le cap et/ou la pente, qui sont utilisés par ledit système de pilotage automatique.

## Revendications

1. Dispositif de réglage d'au moins un paramètre d'aéronef, comprenant pour le réglage de ce paramètre :
- au moins un sélecteur (4) qui est susceptible d'être actionné par un opérateur ;
- au moins un codeur (5) qui est entraîné en rotation par ledit sélecteur (4), lorsque ce dernier est actionné, et qui émet alors un signal représentatif de cette rotation ;
- au moins une unité de calcul (UC) qui reçoit le signal émis par le codeur (5), le met en forme, effectue un calcul pour en déduire la valeur sélectionnée et est susceptible de transmettre la valeur sélectionnée ainsi calculée ; et
- un premier moyen de détection (7) qui est susceptible de détecter un actionnement dudit sélecteur (4),
**caractérisé en ce qu'**il comporte de plus :
- un second moyen de détection (8) qui est susceptible de détecter l'émission d'un signal indiquant une modification de la valeur sélectionnée ; et
- un moyen de comparaison (9) qui est relié auxdits premier et second moyens de détection (7, 8) et qui déduit des informations reçues desdits premier et second moyens de détection (7, 8) un dysfonctionnement lorsque seul l'un desdits premier et second moyens de détection (7, 8) a réalisé une détection.

2. Dispositif selon la revendication 1,
**caractérisé en ce que** ledit moyen de comparaison (9) déduit un dysfonctionnement uniquement lorsque ledit second moyen de détection (8) a détecté une modification de la valeur sélectionnée alors que ledit premier moyen de détection (7) n'a pas détecté d'actionnement dudit sélecteur (4).

3. Dispositif selon l'une des revendications 1 et 2,
**caractérisé en ce qu'**il comporte de plus un premier moyen (10) qui empêche la transmission par l'unité de calcul (UC) d'une modification de la valeur sélectionnée, lors de la détection d'un dysfonctionnement par ledit moyen de comparaison (9).

4. Dispositif selon l'une des revendications 1 à 3,
**caractérisé en ce qu'**il comporte de plus un second moyen (11) qui émet un signal d'alarme, lors de la détection d'un dysfonctionnement par ledit moyen de comparaison (9).

5. Dispositif selon l'une des revendications 1 à 4,
**caractérisé en ce qu'**il comporte de plus un moyen d'affichage (6) qui est destiné à afficher la valeur sélectionnée, transmise par ladite unité de calcul (UC).

6. Dispositif selon l'une quelconque des revendications précédentes,
**caractérisé en ce que** ledit premier moyen de détection (7) comprend un codeur auxiliaire qui est monté en série entre ledit sélecteur (4) et ledit codeur (5).

7. Dispositif selon l'une quelconque des revendications précédentes,
**caractérisé en ce que** ledit second moyen de détection (8) comprend une carte électronique qui reçoit les informations émises à la sortie de ladite unité de calcul (UC).

8. Dispositif selon l'une quelconque des revendications précédentes,
**caractérisé en ce qu'**il comporte de plus un troisième moyen (15) qui est susceptible d'envoyer un ordre de modification de la valeur sélectionnée directement à ladite unité de calcul (UC), et **en ce que** ledit premier moyen de détection (7) est susceptible de détecter un tel ordre et d'indiquer une telle détection audit moyen de comparaison (9).

9. Dispositif selon l'une quelconque des revendications précédentes,
**caractérisé en ce que** ladite unité de calcul (UC) comporte un premier calculateur (C1) qui reçoit le signal émis par le codeur (5) et qui le met en forme, et un second calculateur (C2) qui reçoit le signal mis en forme par ledit premier calculateur (C1), qui effectue un calcul pour en déduire la valeur sélectionnée et qui est susceptible de transmettre la valeur sélectionnée ainsi calculée, et **en ce que** ledit second moyen de détection (8) est susceptible de détecter le signal qui est mis en forme par ledit premier calculateur (C1) et qui est transmis par ce dernier audit second calculateur (C2).

10. Dispositif selon la revendication 9,
**caractérisé en ce que** ledit second moyen de détection (8) et ledit moyen de comparaison (9) sont intégrés dans ledit second calculateur (C2).

11. Dispositif selon l'une des revendications 9 et 10,
**caractérisé en ce qu'**il comporte, de plus, un quatrième moyen (22) qui empêche la prise en compte par ledit second calculateur (C2) d'informations transmises par ledit premier calculateur (C1), relatives à une modification de la valeur sélectionnée, lorsque ledit moyen de comparaison (9) a détecté un dysfonctionnement.

12. Dispositif selon la revendication 11,
**caractérisé en ce que** ledit quatrième moyen (22) est intégré dans ledit second calculateur (C2).

13. Dispositif selon l'une quelconque des revendications 9 à 12,
**caractérisé en ce que** la liaison entre ledit premier moyen de détection (7) et ledit moyen de comparaison (9) transite par ledit premier calculateur (C1) et est munie d'une unité de traitement de signal discret (21), qui est indépendante des fonctions logicielles (17) dudit premier calculateur (C1).

14. Dispositif selon l'une quelconque des revendications 1 à 8,
**caractérisé en ce que** ladite unité de calcul (UC) comporte des première et seconde voies de calcul redondantes, **en ce que** ledit , dispositif (1) comporte un premier ensemble formé d'un second moyen de sélection (8) et d'un moyen de comparaison (9), qui est associé à ladite première voie de calcul, un second ensemble formé d'un second moyen de sélection (8) et d'un moyen de comparaison (9), qui est associé à ladite seconde voie de calcul, et un moyen de priorité pour prendre en compte de manière prioritaire, lorsque seul l'un desdits moyens de comparaison (9) a détecté un dysfonctionnement, les informations issues de la voie de calcul, dont le moyen de comparaison (9) associé n'a pas détecté de dysfonctionnement.

15. Système de pilotage automatique d'un aéronef, comprenant une unité fonctionnelle (DU) qui est agencée dans un boîtier de commande (3A, 3B) muni d'un système (1) de réglage de paramètres qui sont utilisés par ladite unité fonctionnelle (DU),
**caractérisé en ce que** ledit système de réglage de paramètres comporte au moins un dispositif de réglage (1) tel que celui spécifié sous l'une quelconque des revendications 1 à 14.

## Claims

1. A device for adjusting at least one parameter, comprising for the adjustment of this parameter:
- at least one selector (4) which is capable of being actuated by an operator;
- at least one coder (5) which is driven in rotation by said selector (4) when the latter is actuated, and which then emits a signal representative of that rotation;
- at least one arithmetic unit (UC) which receives the signal emitted by the coder (5), formats it, makes a computation to deduce the selected value therefrom and is capable of transmitting the selected value thus computed; and
- a first detection means (7) which is capable of detecting an actuation of said selector (4),
**characterized in that** it also comprises:
- a second detection means (8) which is capable of detecting the emission of a signal indicating a change of the selected value; and
- a comparison means (9) which is linked to said first and second detection means (7, 8) and which deduces a malfunction from the information received from said first and second detection means (7, 8) when only one of said first and second detection means (7, 8) has made a detection.

2. The device as claimed in claim 1,
**characterized in that** said comparison means (9) deduces a malfunction only when said second detection means (8) has detected a change of the selected value while said first detection means (7) has not detected actuation of said selector (4).

3. The device as claimed in one of claims 1 and 2,
**characterized in that** it also comprises a first means (10) which prevents the arithmetic unit (UC) from transmitting a change of the selected value, on detection of a malfunction by said comparison means (9).

4. The device as claimed in one of claims 1 to 3,
**characterized in that** it also comprises a second means (11) which emits an alarm signal, on detection of a malfunction by said comparison means (9).

5. The device as claimed in one of claims 1 to 4,
**characterized in that** it also comprises a display means (6) which is intended to display the selected value, transmitted by said arithmetic unit (UC).

6. The device as claimed in any one of the preceding claims,
**characterized in that** said first detection means (7) comprises an auxiliary coder which is mounted in series between said selector (4) and said coder (5).

7. The device as claimed in any one of the preceding claims,
**characterized in that** said second detection means (8) comprises an electronic circuit board which receives the information emitted at the output of said arithmetic unit (UC).

8. The device as claimed in any one of the preceding claims,
**characterized in that** it also comprises a third means (15) which is capable of sending an order to change the selected value directly to said arithmetic unit (UC), and **in that** said first detection means (7) is capable of detecting such an order and of indicating such a detection to said comparison means (9).

9. The device as claimed in any one of the preceding claims,
**characterized in that** said arithmetic unit (UC) comprises a first computer (C1) which receives the signal emitted by the coder (5) and which formats it, and a second computer (C2) which receives the signal formatted by said first computer (C1), which makes a computation to deduce the selected value therefrom and which is capable of transmitting the selected value thus computed, and **in that** said second detection means (8) is capable of detecting the signal which is formatted by said first computer (C1) and which is transmitted by the latter to said second computer (C2).

10. The device as claimed in claim 9,
**characterized in that** said second detection means (8) and said comparison means (9) are integrated into said second computer (C2).

11. The device as claimed in one of claims 9 and 10,
**characterized in that** it also comprises a fourth means (22) which prevents said second computer (C2) from registering information transmitted by said first computer (C1), relating to a change of the selected value, when said comparison means (9) has detected a malfunction.

12. The device as claimed in claim 11,
**characterized in that** said fourth means (22) is integrated into said second computer (C2).

13. The device as claimed in any one of claims 9 to 12,
**characterized in that** the link between said first detection means (7) and said comparison means (9) passes through said first computer (C1) and is furnished with a discrete signal processing unit (21), which is independent of the software functions (17) of said first computer (C1) .

14. The device as claimed in any one of claims 1 to 8, **characterized in that** said arithmetic unit (UC) comprises first and second redundant computing channels, **in that** said device (1) comprises a first set formed of a second selection means (8) and of a comparison means (9), which is associated with said first computing channel, a second set formed of a second selection means (8) and of a comparison means (9), which is associated with said second computing channel, and a means of priority to register in prioritized manner, when only one of said comparison means (9) has detected a malfunction, the information originating from the computing channel, the associated comparison means (9) of which has not detected a malfunction.

15. An aircraft automatic pilot system, comprising a functional unit (DU) which is disposed in a control module (3A, 3B) furnished with a system (1) of adjusting parameters that are used by said functional unit (DU),
**characterized in that** said system of adjusting parameters comprises at least one adjustment device (1) such as that specified in any one of claims 1 to 14.

## Patentansprüche

1. Einstellvorrichtung für mindestens einen Flugzeugparameter, die zum Einstellen dieses Parameters Folgendes umfasst:
- mindestens einen Wahlschalter (4), der von einer Bedienperson betätigbar ist,
- mindestens einen Enkoder (5), der von dem Wahlschalter (4) drehangetrieben wird, wenn dieser betätigt wird und der dann ein für diese Drehung repräsentatives Signal ausgibt;
- mindestens eine Recheneinheit (UC), die das von dem Enkoder (5) ausgegebene Signal empfängt, es formt, eine Berechnung ausführt, um daraus den gewählten Wert abzuleiten und die geeignet ist, den gewählten Wert, der auf diese Weise berechnet wurde, zu übertragen und
- ein erstes Detektionsmittel (7), das geeignet ist, eine Betätigung des Wahlschalters (4) zu erkennen,
**dadurch gekennzeichnet, dass** sie zusätzlich Folgendes umfasst:
- ein zweites Detektionsmittel (8), das geeignet ist, das Vorliegen eines Signals, welches eine Änderung des gewählten Wertes anzeigt, zu detektieren und
- ein Vergleichsmittel (9), das mit dem ersten und dem zweiten Detektionsmittel (7, 8) verbunden ist und das aus den von dem ersten und dem zweiten Detektionsmittel (7, 8) empfangenen Informationen eine Fehlfunktion ableitet, wenn nur eines der ersten und zweiten Detektionsmittel (7, 8) eine Detektion vorgenommen hat.

2. Vorrichtung nach Anspruch 1,
**dadurch gekennzeichnet, dass** das Vergleichsmittel (9) ausschließlich dann eine Fehlfunktion ableitet, wenn das zweite Detektionsmittel (8) eine Änderung des gewählten Wertes detektiert hat, während das erste Detektionsmittel (7) keine Betätigung des Wahlschalters (4) detektiert hat.

3. Vorrichtung nach Anspruch 1 oder 2,
**dadurch gekennzeichnet, dass** sie zusätzlich ein erstes Mittel (10) umfasst, das bei der Detektion einer Fehlfunktion durch das Vergleichsmittel (9) die Übertragung einer Änderung des gewählten Wertes durch die Recheneinheit (UC) unterbindet.

4. Vorrichtung nach einem der Ansprüche 1 bis 3,
**dadurch gekennzeichnet, dass** sie zusätzlich ein zweites Mittel (11) umfasst, das bei der Detektion einer Fehlfunktion durch das Vergleichsmittel (9) ein Warnsignal ausgibt.

5. Vorrichtung nach einem der Ansprüche 1 bis 4,
**dadurch gekennzeichnet, dass** sie zusätzlich ein Anzeigemittel (6) zum Anzeigen des gewählten, von der Recheneinheit (UC) übertragen Wertes, umfasst.

6. Vorrichtung nach einem der vorhergehenden Ansprüche,
**dadurch gekennzeichnet, dass** das erste Detektionsmittel (7) einen zusätzlichen Enkoder umfasst, der in Reihe zwischen den Wahlschalter (4) und den Enkoder (5) geschaltet ist.

7. Vorrichtung nach einem der vorhergehenden Ansprüche,
**dadurch gekennzeichnet, dass** das zweite Detektionsmittel (8) eine Elektronikplatine umfasst, die die am Ausgang der Recheneinheit (UC) gesendeten Informationen empfängt.

8. Vorrichtung nach einem der vorhergehenden Ansprüche,
**dadurch gekennzeichnet, dass** sie zusätzlich ein drittes Mittel (15) umfasst, das geeignet ist, einen Befehl zum Modifizieren des gewählten Wertes direkt an die Recheneinheit (UC) zu versenden und **dadurch**, dass das erste Detektionsmittel (7) geeignet ist, einen solchen Befehl zu detektieren und dem Vergleichsmittel (9) eine solche Detektion anzuzeigen.

9. Vorrichtung nach einem der vorhergehenden Ansprüche,
**dadurch gekennzeichnet, dass** die Recheneinheit (UC) einen ersten Rechner (C1) umfasst, der das von dem Enkoder (5) ausgegebene Signal empfängt und es formt und einen zweiten Rechner (C2), der das von dem ersten Rechner (C1) geformte Signal empfängt, der eine Berechnung ausführt, um daraus den gewählten Wert abzuleiten und der geeignet ist, den auf diese Weise berechneten gewählten Wert zu übertragen und **dadurch**, dass das zweite Detektionsmittel (8) geeignet ist, das von dem ersten Rechner (C1) geformte und von dem Letzteren an den zweiten Rechner (C2) übertragene Signal zu detektieren.

10. Vorrichtung nach Anspruch 9,
**dadurch gekennzeichnet, dass** das zweite Detektionsmittel (8) und das Vergleichsmittel (9) in den zweiten Rechner (C2) integriert sind.

11. Vorrichtung nach Anspruch 9 oder 10,
**dadurch gekennzeichnet, dass** sie zusätzlich ein viertes Mittel (22) umfasst, das verhindert, dass der zweite Rechner (C2) Informationen bezogen auf eine Änderung des gewählten Wertes, die von dem ersten Rechner (C1) übertragen werden, berücksichtigt, wenn das Vergleichsmittel (9) eine Fehlfunktion detektiert hat.

12. Vorrichtung nach Anspruch 11,
**dadurch gekennzeichnet, dass** das vierte Mittel (22) in den zweiten Rechner (C2) integriert ist.

13. Vorrichtung nach einem der Ansprüche 9 bis 12,
**dadurch gekennzeichnet, dass** die Verbindung zwischen dem ersten Detektionsmittel (7) und dem Vergleichsmittel (9) den ersten Rechner (C1) durchläuft und mit einer Einheit zur diskreten Signalverarbeitung (21) versehen ist, die unabhängig von den Softwarefunktionen (17) des ersten Rechners (C1) ist.

14. Vorrichtung nach einem der Ansprüche 1 bis 8,
**dadurch gekennzeichnet, dass** die Recheneinheit (UC) erste und zweite redundante Berechnungskanäle umfasst, **dadurch**, dass die Vorrichtung (1) eine erste aus einem zweiten Auswahlmittel (8) und einem Vergleichsmittel (9) gebildete Anordnung umfasst, die dem ersten Berechnungskanal zugeordnet ist, eine zweite aus einem zweiten Auswahlmittel (8) und einem Vergleichsmittel (9) gebildete Anordnung, die dem zweiten Berechnungskanal zugeordnet ist und ein Priorisierungsmittel, um, wenn nur eines der Vergleichsmittel (9) eine Fehlfunktion detektiert hat, die Informationen aus dem Berechnungskanal, dessen zugeordnetes Vergleichsmittel (9) keine Fehlfunktion detektiert hat, prioritär zu berücksichtigen.

15. Autopilotsystem eines Flugzeugs, eine Funktionseinheit (DU) umfassend, die in einem Steuergehäuse (3A, 3B) angeordnet ist, das mit einem System (1) für das Einstellen von Parametern ausgestattet ist, die von der Funktionseinheit (DU) verwendet werden,
**dadurch gekennzeichnet, dass** das Einstellsystem für Parameter mindestens eine Einstellvorrichtung (1) wie die unter einem der Ansprüche 1 bis 14 spezifizierte umfasst.
